# FASCICULE DE BREVET EUROPEEN

(11) **EP 0 935 938 B1**
(45) Date de publication et mention de la délivrance du brevet: **26.03.2003**
(21) Numéro de dépôt: 99420031.9
(22) Date de dépôt: 10.02.1999
(51) Int. Cl.: A47J 31/54

(54) **Cafetière électrique du type expresso a régulation thermique**
Elektrische Espresso-Kaffeemaschine mit einer Temperaturregeleinheit
Electric espresso coffeemachine with thermal regulation mean

(30) Priorité: 13.02.1998 FR 9801985
(43) Date de publication de la demande: 18.08.1999
(73) Titulaire: SEB S.A., 69130 Ecully (FR)
(72) Inventeur: Ligneau, Vincent, 69780 Mions (FR); Cubizolles, Serge, 69007 Lyon (FR)

(56) Documents cités:
- EP-A- 0 317 753
- EP-A- 0 514 680
- DD-A- 225 828
- FR-A- 2 465 451
- US-A- 4 565 121
- US-A- 5 183 998

## Description

La présente invention concerne une cafetière électrique pour préparer du café du type expresso.

Les cafetières de ce type comprennent un corps de chauffe comportant un élément chauffant électrique, des moyens pour alimenter en eau ledit corps de chauffe, des moyens pour injecter sous pression l'eau chauffée par ledit corps de chauffe dans la mouture de café, et des moyens pour réguler la température dudit corps de chauffe.

Un bon café expresso requiert une température d'injection d'eau sur la mouture de café suffisante pour extraire les arômes, mais inférieure à la température qui brûlerait le café.

D'autre part, cette température d'injection d'eau doit permettre d'obtenir dans la tasse une température du café boisson suffisante pour le consommateur.

La majorité des cafetières connues sont régulées thermiquement par un ou plusieurs thermostats placés sur le corps de chauffe. Ces thermostats permettent d'alimenter l'élément chauffant quand ils sont soumis à une température inférieure à leur température de consigne et coupent l'alimentation de cet élément chauffant lorsque leur température est supérieure à cette même température de consigne .

Le thermostat est fixé sur un support, à une certaine distance de l'eau et n'est donc pas représentatif de la température de celle-ci. Le choix de la valeur du thermostat se fait donc en tenant compte des transferts thermiques existant entre les différents éléments de la cafetière (élément chauffant, masse métallique, eau, fusible,...). Cette valeur du thermostat est choisie pour garantir une température d'injection d'eau sur la mouture et une température du café boisson dans la tasse idéales .

Il s'avère que cette construction ne permet pas de garantir une température d'injection d'eau sur la mouture et une température du café boisson dans la tasse idéales dans tous les cas d'utilisation de ladite cafetière. Par exemple, pour une température de consigne donnée du thermostat, la température d'injection d'eau sur la mouture et la température du café boisson dans la tasse varient fortement suivant que la cafetière réalise un premier café ou réalise un café peu après en avoir déjà réalisé plusieurs. La différence entre ces deux cas d'utilisation est que les conditions initiales de température de l'ensemble des composants de la cafetière avant démarrage de l'extraction sont différentes.

Cet écart de températures est dû au fait que, à cause de la lenteur des transferts thermiques entre les différents composants de la cafetière, à l'instant de coupure du thermostat, l'ensemble de la cafetière a stocké moins d'énergie lors de la confection du premier café que lors de la confection d'un café peu après en avoir réalisé d'autres.

Cet écart de températures qui peut être de l'ordre de 10°C , est supérieur à la plage de température acceptable pour la confection d'un bon expresso. Aussi, il arrive que le premier café réalisé soit trop froid dans la tasse et que un café réalisé peu après en avoir déjà réalisé plusieurs soit mauvais car la température d'injection d'eau sur la mouture a été trop élevée.

Pour pallier à ce défaut, quelques solutions existent :

Dans la cafetière décrite dans le brevet européen n°EP 0 771 542, la régulation thermique de l'eau se fait en modulant le débit de la pompe en fonction de la température de l'eau en sortie du corps de chauffe. Pour une puissance électrique de l'élément chauffant donnée, un débit d'eau faible impliquera une température de sortie élevée de celle-ci et un débit fort impliquera une température faible de l'eau en sortie. Un dispositif électronique, en fonction des données fournies par un capteur de température, commande le fonctionnement de la pompe.

L'inconvénient de ce système est qu'il est difficile, l'isolation électrique étant délicate et très coûteuse, de venir mesurer la température de l'eau.

Dans la cafetière décrite dans le brevet US n°5 183 998 la régulation thermique de la cafetière se fait par un dispositif électronique qui, en fonction de la valeur d'un capteur de température, commande la puissance de l'élément chauffant.

L'inconvénient de cette solution pour la régulation thermique d'une cafetière est son prix élevé.

Le but de la présente invention est de créer une cafetière du type expresso équipée de moyens de régulation thermique permettant d'obtenir les températures d'injection d'eau sur la mouture et de café boisson dans la tasse, conformes à celles nécessaires à un bon expresso et ce, quelles que soient les conditions initiales en température de la cafetière.

Un autre but de l'invention est de proposer une méthode simple et peu coûteuse de régulation de la température pour une cafetière du type expresso.

Suivant l'invention, cette cafetière est caractérisée en ce que les moyens pour régler la température de chauffage comprennent un capteur de température en contact thermique avec le corps de chauffe associé à un circuit électronique adapté pour commander la coupure du chauffage et sa remise en route pour une même phase de fonctionnement à des températures de consigne qui varient suivant les conditions initiales de température du corps de chauffe.

Les températures de consigne varient aussi suivant les différentes phases de fonctionnement de la cafetière, par exemple :
- phase de chauffe avant démarrage de la pompe,
- phase d'extraction du café,
- phase de maintien en température entre plusieurs extractions café.

Au sein même d'une phase de fonctionnement de la cafetière, par exemple lors de la chauffe avant démarrage de la pompe, la consigne varie en fonction des conditions initiales de température du corps de chauffe au début de cette phase.

La régulation thermique de la cafetière selon la présente invention se fait suivant plusieurs températures de consigne. Les températures de consigne sont différentes non seulement dans le cadre d'une même phase de fonctionnement, par exemple la chauffe avant le démarrage de la pompe, mais elles varient aussi suivant les diverses phases selon lesquelles la machine est amenée à fonctionner.

Ainsi il y a des températures de consigne prédéfinies pour chacune des phases d'extraction du café, par exemple selon si l'on chauffe avant l'extraction du café, pendant l'extraction du café ou après l'extraction du café.

De façon similaire pour la confection de la vapeur, la régulation se fait à des températures de consigne pour la chauffe avant la confection de la vapeur, pendant l'extraction de la vapeur ou après la confection de la vapeur, chaque phase de fonctionnement ayant ainsi ses propres températures de consigne.

En modifiant la température de consigne, on obtient, quelle que soit la phase de fonctionnement et quelles que soient les conditions initiales de température les valeurs de consigne idéales pour atteindre les bonnes températures d'injection d'eau sur la mouture et de café boisson dans la tasse .

De préférence, la température de consigne pour la phase de chauffe avant l'extraction du café est supérieure à 100°C lorsque la température du corps de chauffe est sensiblement égale à la température ambiante avant le démarrage de la phase de chauffe et cette température est sensiblement égale à 100°C lorsque la température du corps de chauffe est sensiblement plus élevée que la température ambiante avant le démarrage de la phase de chauffe.

Selon une version préférée de l'invention, le capteur de température est une résistance dont la valeur ohmique varie en fonction de la température, ledit circuit électronique étant capable de mesurer cette valeur ohmique et de la comparer à des valeurs prédéterminées correspondant aux différentes températures de consigne.

De préférence également, le circuit électronique est adapté pour déclencher le fonctionnement d'un relais qui commande le circuit de puissance d'alimentation électrique de l'élément chauffant.

Selon une version avantageuse de l'invention, le circuit électronique est adapté pour commander l'émission d'un signal lorsque la température de consigne prédéterminée pour la phase de démarrage du cycle de l'extraction du café est atteinte.

Dans une version simple de l'invention, ledit signal est adapté pour informer l'utilisateur qu'il peut commander manuellement la mise en route de la pompe d'alimentation en eau du corps de chauffe.

Dans une autre version de l'invention, le circuit électronique est adapté pour commander automatiquement le fonctionnement de la pompe d'alimentation en eau du corps de chauffe lorsque la température de consigne prédéterminée pour la phase de démarrage du cycle de l'extraction du café est atteinte.

Dans une autre version de l'invention, le circuit électronique est adapté pour commander automatiquement le fonctionnement de la pompe d'alimentation en eau du corps de chauffe lorsque la température de consigne prédéterminée propre à la confection de la vapeur est atteinte. Une température de consigne adéquate, supérieure à la température de consigne pour la confection du café, est utilisée.

D'autres particularités et avantages de l'invention apparaîtront encore dans la description ci-après.

Aux dessins annexés donnés à titre d'exemples non limitatifs :
- la figure 1 est un schéma montrant le circuit hydraulique d'une cafetière électrique du type expresso,
- la figure 2 est un schéma du dispositif de régulation thermique de la cafetière expresso,
- la figure 3 montre des courbes de température en fonction du temps, du capteur de température, de la mouture de café et du café pour quatre cycles successifs de fonctionnement de la cafetière.

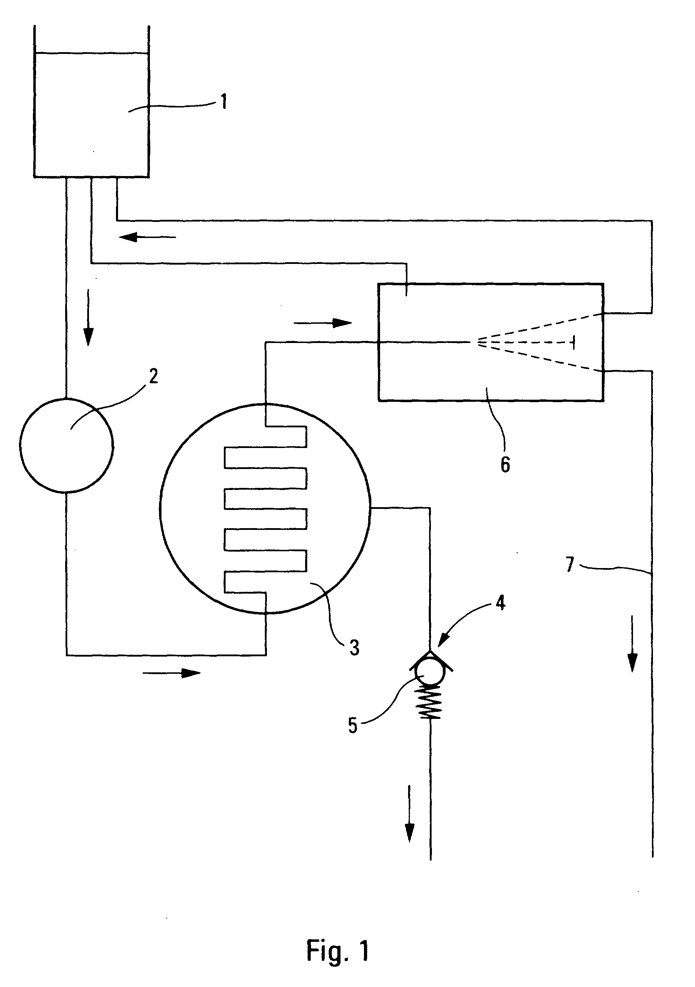

En référence à la figure 1, la cafetière électrique du type expresso comprend un réservoir d'eau 1 communiquant avec une pompe électrique 2 qui envoie l'eau dans un corps chauffant 3 (thermobloc) qui comprend un élément chauffant électrique.

L'eau chauffée dans le corps chauffant 3 est injectée sous pression dans le nez 4 qui débouche par un clapet 5 dans le bac contenant la mouture de café.

L'eau et la vapeur produites dans le corps de chauffe 3 communiquent également avec une vanne 6 à plusieurs voies qui répartit l'eau vers le réservoir 1 et la vapeur vers le circuit de vapeur 7.

La cafetière électrique comprend également des moyens pour régler la température de chauffage du corps de chauffe 3.

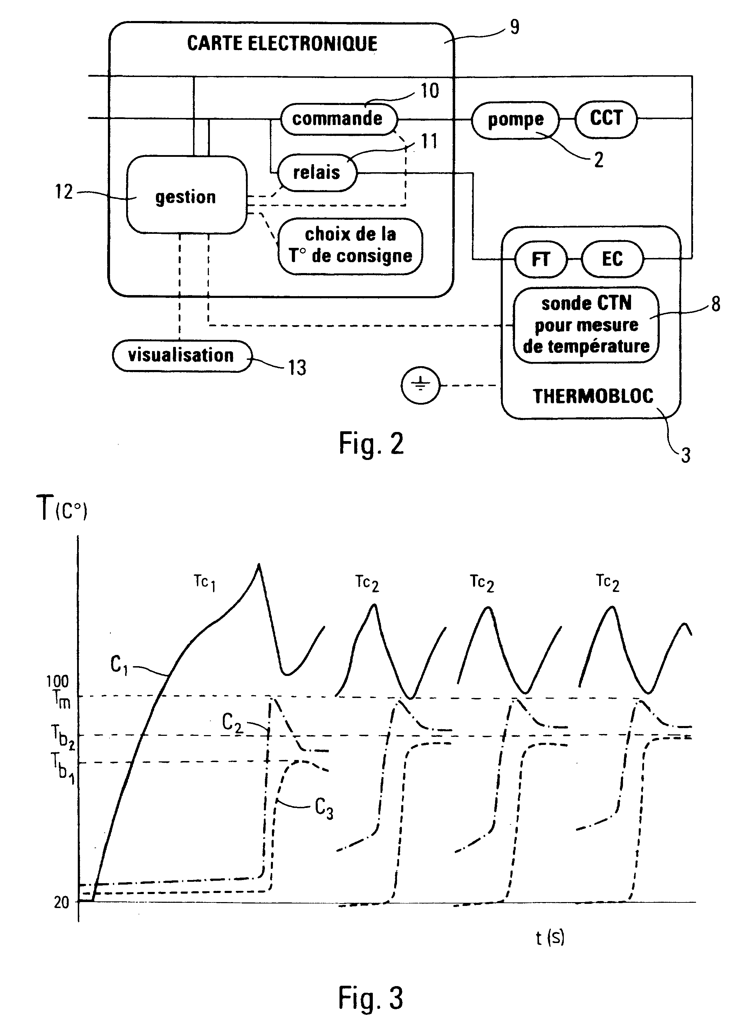

Conformément à l'invention, les moyens pour régler la température de chauffage comprennent (voir figure 2) un capteur de température 8 en contact thermique avec le corps de chauffe 3 associé à un circuit électronique 9 adapté pour commander la coupure du chauffage et sa remise en route à des température de consigne qui varient suivant les conditions initiales de température du corps de chauffe et suivant les différentes phases de fonctionnement de la cafetière

Le circuit électronique est conçu de telle manière qu'en plus des températures de consigne, il définit un hystérésis qui correspond à l'écart entre la température de déclenchement de la chauffe et la température d'enclenchement de la chauffe. Le but est d'assurer un meilleur compromis entre la durée de vie des composants électromécaniques, dans ce cas du relais, et la bonne précision de la régulation en température.

En référence à la figure 2, le circuit électronique 9 comprend un circuit de puissance représenté en traits pleins et un circuit basse tension représenté en traits pointillés.

Le circuit de puissance alimente au moyen d'une commande 10 la pompe 2 et le coupe-circuit thermique CCT.

Il alimente également au moyen d'un relais 11, l'élément chauffant EC et le fusible thermique FT du corps de chauffe 3 (thermobloc).

Le circuit basse tension relie l'organe de gestion 12 à la commande 10, au relais 11, au capteur de température 8 en contact thermique avec le corps de chauffe 3 et à un moyen de visualisation 13 tel qu'une lampe.

L'organe de gestion 12 choisit la température de consigne. Ainsi, la température de consigne est supérieure à 100°C lorsque la température du corps de chauffe est sensiblement égale à la température ambiante avant le démarrage de la phase de chauffe et cette température est sensiblement égale à 100°C lorsque la température du corps de chauffe est sensiblement plus élevée que la température ambiante avant le démarrage de la phase de chauffe. La différence entre les valeurs des deux températures de consigne est d'environ une dizaine de degrés.

De préférence, le capteur de température 8 est une résistance dont la valeur ohmique varie en fonction de la température.

Le circuit électronique 9 est capable de mesurer cette valeur ohmique et de la comparer à des valeurs prédéterminées correspondant aux différentes températures de consigne.

Le circuit électronique 9 peut définir autant de plages de valeurs ohmiques que de consignes nécessaires à une bonne régulation de la température, ces plages étant au nombre de deux au minimum.

Selon un mode préféré de réalisation de l'invention, la régulation de la température se fait en utilisant deux plages de valeurs ohmiques pour la confection du café.

Selon le même mode de réalisation de l'invention, il existe une plage complémentaire pour la production de la vapeur. Une température de consigne adéquate, supérieure à la température de consigne du café, est utilisée.

Par ailleurs, le circuit électronique 9 est adapté pour déclencher le fonctionnement d'un relais 11 qui commande le circuit de puissance d'alimentation électrique de l'élément chauffant EC.

En outre, le circuit électronique 9 est adapté pour commander l'émission d'un signal 13 lorsque la température de consigne prédéterminée pour la phase de démarrage du cycle de l'extraction du café est atteinte.

Dans une version simplifiée, le signal 13 est adapté pour informer l'utilisateur qu'il peut commander manuellement la mise en route de la pompe 2 d'alimentation en eau du corps de chauffe 3.

Dans une version préférée, le circuit électronique 9 est adapté pour commander automatiquement le fonctionnement de la pompe 2 d'alimentation en eau du corps de chauffe 3 lorsque la température de consigne prédéterminée pour la phase de démarrage du cycle de l'extraction du café est atteinte.

On va maintenant décrire en référence à la figure 3, le fonctionnement de la cafetière électrique type expresso que l'on vient de décrire.

Sur cette figure 3, la courbe C₁ montre l'évolution de la température T (°C) mesurée par le capteur de température 8 en fonction du temps t en secondes .

La courbe C₂ montre l'évolution de la température de la mouture de café et la courbe C₃ l'évolution de la température du café boisson.

Lors de la première mise en route de la cafetière, les températures du capteur 8, de la mouture et du café boisson, sont sensiblement égales à la température ambiante.

Lors du chauffage du corps de chauffe, la courbe C₁ de température du capteur 8 monte régulièrement.

L'organe de gestion 12 du circuit électronique choisit de couper le chauffage à une température de consigne T_{c1}. A ce moment, la commande 10 déclenche la pompe 2 qui envoie l'eau chaude dans la mouture dont la température (voir courbe C₂) monte brusquement jusqu'à Tₘ. Puis, le café boisson est formé et sa température atteint la valeur T_{b1}.

Ainsi, malgré la température relativement élevée (supérieure à 100°C) à laquelle s'effectue la coupure du chauffage, la mouture n'est pas portée à une température excessive susceptible de nuire à l'arôme du café et le café boisson s'écoule dans la tasse à une température T_{b} suffisante pour le consommateur.

En revanche, si la température de coupure de chauffe avait été inférieure à T_{c1}, le café boisson n'aurait pas pu atteindre une température suffisante.

Lors des cycles suivants de préparation de café, la température de consigne de coupure du chauffage par le capteur, est seulement égale à T_{c2}, inférieure à T_{c1} d'une dizaine de degrés.

En effet, dans ces cycles suivants, la mouture, ainsi que l'ensemble des composants de la cafetière, se trouvent déjà au début à une température supérieure à la température ambiante, de sorte que l'eau injectée dans celle-ci peut être moins chaude, pour porter cette mouture à Tₘ .

Dans ces cycles suivants, le café boisson est à une température T_{b2}, légèrement supérieure à T_{b1}.

Si, dans ces cycles suivants, la température de consigne avait été égale à T_{c1}, comme dans le premier cycle, l'eau chaude injectée dans la mouture de café aurait été à une température trop élevée, ce qui aurait détruit l'arôme du café.

## Revendications

1. Cafetière électrique pour préparer du café expresso comprenant un corps de chauffe (3) comportant un élément chauffant électrique, des moyens (2) pour alimenter en eau ledit corps de chauffe (3) et des moyens pour injecter sous pression l'eau chauffée par ledit corps de chauffe (3) dans la mouture de café, et des moyens pour réguler la température du corps de chauffe, lesdits moyens pour régler la température de chauffage comprenant un capteur de température (8) en contact thermique avec le corps de chauffe (3) associé à un circuit électronique (9), **caractérisée en ce que** ledit circuit électronique est adapté pour commander la coupure du chauffage et sa remise en route pour une même phase de fonctionnement à des températures de consigne qui varient suivant les conditions initiales de température du corps de chauffe.

2. Cafetière selon la revendication 1, **caractérisée en ce que** la température de consigne pour la phase de chauffe avant l'extraction du café est supérieure à 100°C lorsque la température du corps de chauffe est sensiblement égale à la température ambiante avant le démarrage de la phase de chauffe et cette température de consigne est sensiblement égale à 100°C lorsque la température du corps de chauffe est sensiblement plus élevée que la température ambiante avant le démarrage de la phase de chauffe.

3. Cafetière selon l'une des revendications 1 ou 2, **caractérisée en ce que** le circuit électronique (9) est adapté pour commander le fonctionnement de la cafetière selon au moins deux températures de consigne.

4. Cafetière selon l'une des revendications 1 à 3, **caractérisée en ce que** le capteur de température (8) est une résistance dont la valeur ohmique varie en fonction de la température, ledit circuit électronique (9) étant capable de mesurer cette valeur ohmique et de la comparer à des valeurs prédéterminées correspondant aux différentes températures de consigne.

5. Cafetière selon l'une des revendications 1 à 4, **caractérisée en ce que** le circuit électronique (9) est adapté pour déclencher le fonctionnement d'un relais (11) qui commande le circuit de puissance d'alimentation électrique de l'élément chauffant.

6. Cafetière selon l'une des revendications 1 à 5, **caractérisée en ce que** le circuit électronique (9) est adapté pour commander l'émission d'un signal (13) lorsque la température de consigne prédéterminée pour la phase de démarrage du cycle de l'extraction du café est atteinte.

7. Cafetière selon la revendication 6, **caractérisée en ce que** ledit signal (13) est adapté pour informer l'utilisateur qu'il peut commander manuellement la mise en route de la pompe d'alimentation (2) en eau du corps de chauffe (3).

8. Cafetière conforme à l'une des revendications 1 à 6, **caractérisée en ce que** le circuit électronique (9) est adapté pour commander automatiquement le fonctionnement de la pompe d'alimentation (2) en eau du corps de chauffe (3) lorsque la température de consigne prédéterminée pour la phase de démarrage du cycle de l'extraction du café est atteinte.

9. Cafetière selon l'une des revendications 1 à 8, **caractérisée en ce que** le circuit électronique (9) est adapté pour commander automatiquement le fonctionnement de la pompe d'alimentation (2) en eau du corps de chauffe (3) lorsque la température de consigne prédéterminée propre à la confection de la vapeur est atteinte.

## Claims

1. An electric coffeemaker for preparing expresso coffee, the coffeemaker comprising a heater body (3) having an electric heater element, means (2) for feeding said heater body (3) with water, and means for taking the water heated by said heater body (3) and injecting it under pressure into the coffee grounds, and means for regulating the temperature of the heater body, said means for regulating the heating temperature comprising a temperature sensor (8) in thermal contact with the heater body (3) associated with an electronic circuit (9), the coffeemaker being **characterized in that** said electronic circuit is adapted to cause heating to be switched off and switched back on again during a given stage of operation at reference temperatures that vary depending on the initial temperature conditions of the heater body.

2. A coffeemaker according to claim 1, **characterized in that** the reference temperature for the stage of heating prior to extracting coffee is higher than 100°C when the temperature of the heater body is substantially equal to ambient temperature before starting the heating stage, and said reference temperature is substantially equal to 100°C when the temperature of the heater body is significantly higher than ambient temperature prior to starting the heating stage.

3. A coffeemaker according to claim 1 or claim 2, **characterized in that** the electronic circuit (9) is adapted to control the operation of the coffeemaker in compliance with at least two reference temperatures.

4. A coffeemaker according to any one of claims 1 to 3, **characterized in that** the temperature sensor (8) is a resistor whose resistance varies as a function of temperature, said electronic circuit (9) being capable of measuring said resistance and of comparing it with predetermined values corresponding to different reference temperatures.

5. A coffeemaker according to any one of claims 1 to 4, **characterized in that** said electronic circuit (9) is adapted to trigger operation of a relay (11) controlling the power circuit feeding electricity to the heater element.

6. A coffeemaker according to any one of claims 1 to 5, **characterized in that** said electronic circuit (9) is adapted to cause a signal (13) to be issued on reaching the predetermined reference temperature for the stage of starting the coffee extraction cycle.

7. A coffeemaker according to claim 6, **characterized in that** said signal (13) is adapted to inform the user that the pump (2) for feeding water to the heater body (3) can be switched on manually.

8. A coffeemaker according to any one of claims 1 to 6, **characterized in that** the electronic circuit (9) is adapted to switch on the water feed pump (2) for the heater body (3) automatically on reaching the predetermined reference temperature for the state of starting the coffee extraction cycle.

9. A coffeemaker according to any one of claims 1 to 8, **characterized in that** the electronic circuit (9) is adapted to switch on the water feed pump (2) of the heater body (3) automatically on reaching the predetermined reference temperature specific to generating steam has been reached.

## Patentansprüche

1. Elektrische Kaffeemaschine, um Espresso zuzubereiten, mit einem Heizkörper (3) mit einem elektrischen Heizelement, Mitteln (2) zum Versorgen des Heizkörpers (3) mit Wasser und Mitteln zum Einspritzen des durch den Heizkörper (3) erhitzten Wassers unter Druck in das Kaffeepulver, und Mitteln zum Regeln der Temperatur des Heizkörpers, wobei die Mittel zum Regeln der Heiztemperatur einen Temperatursensor (8) in Wärmekontakt mit dem Heizkörper (3) umfassen, welcher mit einer elektronischen Schaltung (9) verbunden ist, **dadurch gekennzeichnet, daß** die elektronische Schaltung dazu ausgelegt ist, die Unterbrechung des Heizens und seine Wiederaufnahme für ein und dieselbe Betriebsphase bei Solltemperaturen zu steuern, die sich gemäß den Anfangsbedingungen der Temperatur des Heizkörpers ändern.

2. Kaffeemaschine nach Anspruch 1, **dadurch gekennzeichnet, daß** die Solltemperatur für die Heizphase vor der Extraktion des Kaffees höher ist als 100°C, wenn die Temperatur des Heizkörpers vor dem Beginn der Heizphase im wesentlichen gleich der Umgebungstemperatur ist, und diese Solltemperatur im wesentlichen gleich 100°C ist, wenn die Temperatur des Heizkörpers vor dem Beginn der Heizphase wesentlich höher ist als die Umgebungstemperatur.

3. Kaffeemaschine nach einem der Ansprüche 1 oder 2, **dadurch gekennzeichnet, daß** die elektronische Schaltung (9) dazu ausgelegt ist, den Betrieb der Kaffeemaschine gemäß mindestens zwei Solltemperaturen zu steuern.

4. Kaffeemaschine nach einem der Ansprüche 1 bis 3, **dadurch gekennzeichnet, daß** der Temperatursensor (8) ein Widerstand ist, dessen ohmscher Wert sich in Abhängigkeit von der Temperatur ändert, wobei die elektronische Schaltung (9) in der Lage ist, diesen ohmschen Wert zu messen und ihn mit vorbestimmten Werten zu vergleichen, die den verschiedenen Solltemperaturen entsprechen.

5. Kaffeemaschine nach einem der Ansprüche 1 bis 4, **dadurch gekennzeichnet, daß** die elektronische Schaltung (9) dazu ausgelegt ist, die Funktion eines Relais (11) auszulösen, welches den Leistungskreis zur elektrischen Versorgung des Heizelements steuert.

6. Kaffeemaschine nach einem der Ansprüche 1 bis 5, **dadurch gekennzeichnet, daß** die elektronische Schaltung (9) dazu ausgelegt ist, das Aussenden eines Signals (13) zu steuern, wenn die vorbestimmte Solltemperatur für die Startphase des Zyklus der Extraktion des Kaffees erreicht ist.

7. Kaffeemaschine nach Anspruch 6, **dadurch gekennzeichnet, daß** das Signal (13) dazu ausgelegt ist, den Benutzer zu informieren, daß er die Inbetriebnahme der Pumpe (2) zur Versorgung des Heizkörpers (3) mit Wasser manuell steuern kann.

8. Kaffeemaschine nach einem der Ansprüche 1 bis 6, **dadurch gekennzeichnet, daß** die elektronische Schaltung (9) dazu ausgelegt ist, den Betrieb der Pumpe (2) zur Versorgung des Heizkörpers (3) mit Wasser automatisch zu steuern, wenn die vorbestimmte Solltemperatur für die Startphase des Zyklus der Extraktion des Kaffees erreicht ist.

9. Kaffeemaschine nach einem der Ansprüche 1 bis 8, **dadurch gekennzeichnet, daß** die elektronische Schaltung (9) dazu ausgelegt ist, den Betrieb der Pumpe (2) zur Versorgung des Heizkörpers (3) mit Wasser automatisch zu steuern, wenn die vorbestimmte Solltemperatur, die zur Herstellung des Dampfs geeignet ist, erreicht ist.
